# EUROPEAN PATENT APPLICATION

(11) **EP 4 593 350 A1**
(43) Date of publication of application: **30.07.2025**
(21) Application number: 23936429.2
(22) Date of filing: 20.11.2023
(51) Int. Cl.: H04L 47/6275

(54) **FLOW TABLE MANAGEMENT METHOD AND APPARATUS FOR DATA PACKET PROCESSING, DEVICE, AND STORAGE MEDIUM**

(30) Priority: 09.05.2023 CN 202310528391
(71) Applicant: Tencent Technology (Shenzhen) Company Limited, Shenzhen, Guangdong 518057 (CN)
(72) Inventor: ZHAO, Jian, Shenzhen, Guangdong 518057 (CN); YE, Xiaolong, Shenzhen, Guangdong 518057 (CN); WANG, Jian, Shenzhen, Guangdong 518057 (CN); WANG, Liang, Shenzhen, Guangdong 518057 (CN)
(74) Representative: AWA Sweden AB
(86) International application number: PCT/CN2023/132498
(87) International publication number: WO 2024/230125

(57) **Abstract**

The present application relates to the technical field of computers, especially the cloud technology, and provides a flow table management method and apparatus for data packet processing, a device, and a storage medium. A cascaded circular queue data structure is used to store and manage flow tables, improving the management efficiency of flow tables. Specifically, for each thread requesting flow table allocation, flow table information is allocated on the basis of the priority order of each level of flow table queue; since each thread exclusively uses a first-level flow table queue, no competition for flow table information will occur between threads, and therefore, a lock-free and concurrent flow table allocation method is implemented, and the management efficiency of flow tables is improved. Additionally, for each thread requesting flow table information release, each piece of released flow table information is stored in a third-level flow table queue by means of an atomic instruction, so that it is ensured that the released flow table information can be reallocated, and the utilization rate of flow table information is improved. Furthermore, compared with a method of using a database to store and manage flow tables, the present invention reduces the occupation of memory space.

## Description

### FIELD

The disclosure relates to the field of computer technologies, and in particular, to a flow table management method and apparatus for data packet processing, a device, and a storage medium.

### BACKGROUND

In a software defined network (SDN) structure, separation of a control plane and a data plane is implemented according to an OpenFlow protocol, so that operations on the control plane are centralized into an SDN controller, and a switch (such as a virtual switch or an SDN switch) is only responsible for locally performing simple and high-speed operations on the data plane. In a process in which the switch performs the operations on the data plane, processing (such as searching, modifying, and forwarding) of the switch on a data packet is based on a flow table.

Currently, in related technologies, an independent database is mainly configured for storing flow table information, to implement management operations such as allocation and release of the flow table. In an SDN network, a creating and aging speed of communication links of a virtual switch may reach millions per second, meaning that the database receives millions of flow table management requests per second. In the related technologies, to ensure sequentiality and consistency of flow table management, access to the database is mainly controlled by using a single thread or a lock, but this manner reduces efficiency of the flow table management. The flow table information in the database usually exists on a particular non-uniform memory access (NUMA) node. When a plurality of threads request allocation or release of flow tables, cross-NUMA-node access may occur, reducing the efficiency of the flow table management.

### SUMMARY

An embodiment of this application provides a flow table management method for data packet processing, the method performed by a server,
the server includes at least one non-uniform memory access, NUMA, node, each of the at least one NUMA node runs at least one thread for processing data packets using flow tables,
the method includes,
   in response to a flow table allocation request received from a first thread running in a first NUMA node, allocating a flow table identifier to the first thread, the flow table identifier is selected from one of a first-level flow table queue, a second-level flow table queue and a third-level flow table queue based on a pre-defined priority order, according to which the first-level flow table queue is prioritized over the second-level flow table queue which is prioritized over the third-level flow table queue; the first-level flow table queue is stored in a first memory space which is allocated to the first thread from a second memory space of the first NUMA node, the second-level flow table queue is stored in the second memory space, and the third-level flow table queue is stored in a memory space of the server;
   in response to a flow table release request received from the first thread, storing a second flow table identifier identified in the flow table release request into the third-level flow table queue.

An embodiment of this application further provides a flow table management apparatus for data packet processing, the apparatus including:
a request receiving module, configured to respectively receive flow table management requests concurrently transmitted by a plurality of threads, at least one of the plurality of threads running on a NUMA node; and
a flow table management module, configured to: in response to a flow table allocation request received from a first thread running in a first NUMA node, allocate a flow table identifier to the first thread, wherein the flow table identifier is selected from one of a first-level flow table queue, a second-level flow table queue and a third-level flow table queue based on a pre-defined priority order, according to which the first-level flow table queue is prioritized over the second-level flow table queue which is prioritized over the third-level flow table queue; in response to a flow table release request received from the first thread, store a second flow table identifier identified in the flow table release request into the third-level flow table queue;
wherein the first-level flow table queue is stored in a first memory space which is allocated to the first thread from a second memory space of the first NUMA node, the second-level flow table queue is stored in the second memory space, and the third-level flow table queue is stored in a memory space of the server.

An embodiment of this application provides an electronic device, including a processor and a memory, the memory having a computer program stored therein, and the computer program, when being executed by the processor, implementing operations of the foregoing flow table management method for data packet processing.

An embodiment of this application provides a computer-readable storage medium, having computer-executable instructions stored therein, the computer-executable instructions, when being executed by an electronic device, implementing operations of the foregoing flow table management method for data packet processing.

An embodiment of this application provides a computer program product, including a computer program, the computer program, when being executed by an electronic device, implementing operations of the foregoing flow table management method for data packet processing.

Other features and advantages of this application are described in the following specification, and partially become apparent from the specification or may be learned from implementation of this application. Objectives and other advantages of this application may be implemented and obtained through structures particularly pointed out in the specification, claims, and accompanying drawings.

### BRIEF DESCRIPTION OF THE DISCLOSURE

To describe the technical solutions of some embodiments of this disclosure more clearly, the following briefly introduces the accompanying drawings for describing some embodiments. The accompanying drawings in the following description show only some embodiments of the disclosure, and a person of ordinary skill in the art may still derive other drawings from these accompanying drawings without creative efforts. In addition, one of ordinary skill would understand that aspects of some embodiments may be combined together or implemented alone.
FIG. 1A is a schematic diagram of a flow table management process in a related technology according to some embodiments.
FIG. 1B is a diagram of an application scenario applicable to some embodiments.
FIG. 1C is a diagram of another application scenario applicable to some embodiments.
FIG. 2 is a flowchart of a flow table management method for data packet processing according to some embodiments.
FIG. 3 is a schematic diagram of a NUMA architecture according to some embodiments.
FIG. 4 is a schematic diagram of internal memories occupied by various levels of flow table queues according to some embodiments.
FIG. 5 is a schematic diagram of initial content of a third-level flow table queue according to some embodiments.
FIG. 6 is a flowchart of a method for allocating flow table information according to some embodiments.
FIG. 7A is a schematic diagram of allocating flow table information from a first-level flow table queue according to some embodiments.
FIG. 7B is a schematic diagram of changes of a head pointer and a tail pointer in a first-level flow table queue according to some embodiments.
FIG. 7C is a schematic diagram of allocating flow table information from a second-level flow table queue according to some embodiments.
FIG. 7D is a schematic diagram of changes of a head pointer and a tail pointer in a second-level flow table queue according to some embodiments.
FIG. 7E is a schematic diagram of allocating flow table information from a third-level flow table queue according to some embodiments.
FIG. 7F is a schematic diagram of changes of a head pointer and a tail pointer in a third-level flow table queue according to some embodiments.
FIG. 8A is a schematic diagram of a pointer before released flow table information is stored into a third-level flow table queue according to some embodiments.
FIG. 8B is a schematic diagram of a pointer after released flow table information is stored into a third-level flow table queue according to some embodiments.
FIG. 9 is a diagram of a structure of a flow table management apparatus for data packet processing according to some embodiments.
FIG. 10 is a diagram of a structure of a flow table management apparatus according to some embodiments.
FIG. 11 is a diagram of a structure of an electronic device according to some embodiments.

### DESCRIPTION OF EMBODIMENTS

To make the objectives, technical solutions, and advantages of the present disclosure clearer, the following further describes the present disclosure in detail with reference to the accompanying drawings. The described embodiments are not to be construed as a limitation to the present disclosure. All other embodiments obtained by a person of ordinary skill in the art without creative efforts shall fall within the protection scope of the present disclosure.

A cloud technology is a hosting technology that unifies a series of resources such as hardware, software, and a network in a wide area network or a local area network to implement computing, storage, processing, and sharing of data.

The cloud technology is a general term for a network technology, an information technology, an integration technology, a management platform technology, an application technology, and the like applied based on a business mode of cloud computing, may form a resource pool, which is used as required, and is flexible and convenient. A cloud computing technology is becoming an important support. A back-end service of a technical network system may use a large amount of computing and storage resources, such as a video website, a picture website, and more portal websites. With rapid development and application of the Internet industry, each item may have an identifier (ID) in the future, and all identifiers may be transmitted to a backend system for logical processing. Data of different levels is processed separately, and data in various industries may involve strong system support. This can be implemented only through cloud computing.

With diversified development of the Internet, real-time data flows, and connection devices, and push of requirements such as search services, social networks, mobile commerce, and open cooperation, the cloud computing develops rapidly.

The cloud computing refers to a delivery and use mode of information technology (IT) infrastructure, and refers to obtaining required resources through a network in an on-demand and scalable manner. Generalized cloud computing refers to a delivery and use mode of a service, and refers to obtaining a required service through a network in an on-demand and extended manner. Such services may be related to IT, software, and the Internet, or may be other services. The cloud computing is a product of fusion and development of computers and network technologies such as grid computing, distributed computing, parallel computing, utility computing, network storage, virtualization, and load balancing. Different from previous parallel distributed computing, generation of the cloud computing conceptually promotes revolutionary changes in the entire Internet mode and enterprise management mode.

Some terms are explained below to facilitate understanding of a person skilled in the art.

A switch is configured to connect network devices and enable cross-network communication, and can forward a data packet to a specified network device to help guide a network flow, to implement various networking functions. The switch includes a virtual switch and a physical switch. The virtual switch may refer to a network switch implemented by software, and the physical switch has independent hardware.

A flow table refers to a table stored in the switch and configured for performing processing operations such as identification, searching, forwarding, and modification of a data packet, and is configured for controlling a flow in a network. Each flow table includes a plurality of flow table entries. Each flow table entry represents a data packet processing rule. After a data packet enters the switch, a destination port for processing the data packet is obtained by querying the flow table.

Flow table information is a unique identifier (ID) to identify a flow in a server, also referred to as flow table identifier hereinafter for short, and may be, for example, an ID formed by at least one of numbers, letters, and symbols.

NUMA is an internal memory design architecture for multiple processors. In this architecture, access time of an internal memory depends on relative positions between a processor and the internal memory. An internal memory close to the processor is referred to as a local internal memory, and an internal memory far from the processor is referred to as a non-local internal memory.

An atomic instruction is an instruction configured for maintaining a synchronization relationship between a plurality of central processing units (CPUs) when the plurality of CPUs resolves the same problem by using a parallel algorithm, and is an instruction indivisible from a perspective of the software.

A lock is a mechanism in a multi-thread concurrent environment, and ensures that only one thread is executed at a time point.

The following briefly describes some embodiments.

In a related technology, an independent database is mainly configured for storing flow table information, to implement management operations such as allocation and release of a flow table, and this may be applicable to single-thread access. In a case of multi-thread concurrent access, a lock may be configured for avoiding dirty data. The dirty data herein is data that does not satisfy expectation, or that is illegal or invalid, and is also referred to as "garbage data" or "bad data". The dirty data may exist in various data sources, including a file, a database, network data, and the like. For example, a table of a database stores height information, but a height recorded in the table is incorrectly input as a negative number. The height is a piece of dirty data.

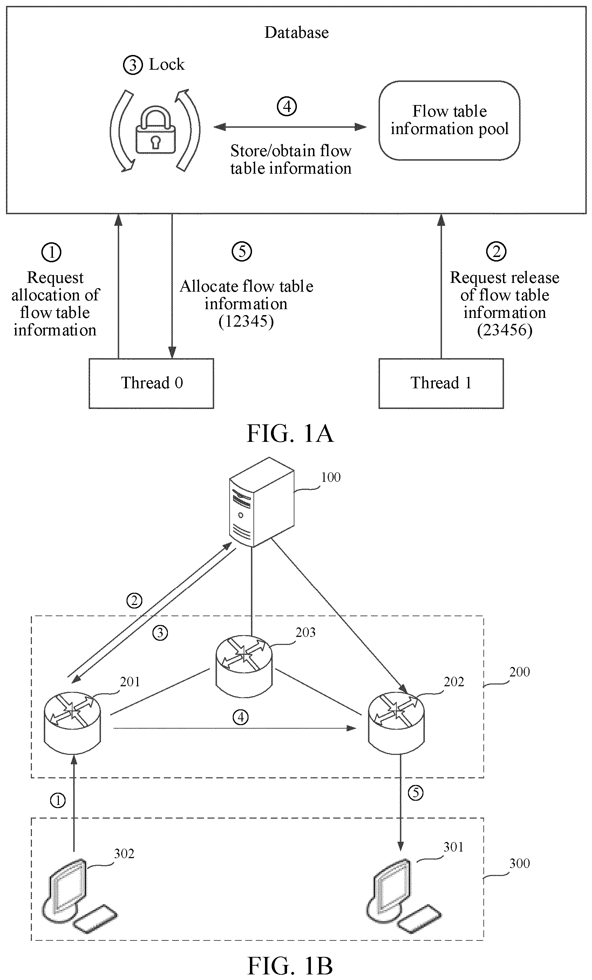

For example, concurrent flow table management is processed by using a database. As shown in FIG. 1A, a thread 0 may be allocated with a flow table, so that the thread 0 transmits a database access request to obtain a piece of flow table information. A thread 1 may release a flow table, so that the thread 1 transmits a database access request to release a piece of flow table information (ID: 23456); Because the database access request of the thread 0 reaches the database first, a management thread responsible for performing allocation and release of flow table information in the database ensures, by using the lock, that the flow table information (ID: 23456) that has not been released back to a flow table information pool is not allocated to the thread 0 in this process, so that sequentiality and consistency of the requests are ensured. After the thread 0 obtains the lock, the management thread accesses the flow table information pool that stores the flow table information, selects a new piece of flow table information (ID: 12345), and returns the new flow table information to the thread 0. After allocation of the flow table information is completed, the management thread performs locking again, to process the database access request of the thread 1. By accessing the flow table information pool, the management thread stores the flow table information (ID: 23456) released by the thread 1 into the flow table information pool, and the flow table information (ID: 23456) newly stored in the flow table information pool can be re-allocated for use.

When flow table management is performed by using the database, persistence of the flow table information can be ensured. During hot upgrade or downtime of the virtual switch, consistency and persistence of the flow table information can be ensured. The database processes a request of a single thread for allocation or release of the flow table information, and processes requests of a plurality of threads for allocation or release of the flow table information by using the lock, so that sequentiality of management of the flow table information can be ensured, and repeated allocation of the same flow table information or missing retrieving of the flow table information can be avoided.

When flow table management is performed by using the database, the following problems may exist:
1. In an SDN network, a creating and aging speed of communication links of a virtual switch may reach millions per second, meaning that the virtual switch may access the database millions of times per second to perform management such as allocation and release of the flow table information. The single thread or lock is used to ensure sequentiality and consistency, and the plurality of threads cannot be concurrently allocated with and concurrently release the flow table information. As a result, performance of management such as allocation and release of the flow table information is low, and a flow requirement of the virtual switch during high-speed processing cannot be satisfied. To ensure transactionality and persistence of allocation and release of flow table information in the database, results of allocation and release may be first stored in a hard disk and then returned to the threads in the virtual switch. Read and write performance of the hard disk is low, as a result, performance of the database in supporting allocation and release of the flow table information is limited.
2. When the database stores the flow table information, to facilitate managing the flow table information, for each piece of flow table information, additional meta information or management information further may be stored. As an amount of stored flow table information increases, occupied larger internal memory is additionally occupied, resulting in a decrease in effective utilization of internal memory. For example, additional 8 to 24 bytes may be occupied for storing each piece of flow table information. An internal memory of approximately 800 MB to 2.4 GB may be occupied for storing 100 M of flow table information.
3. Currently, a server architecture used by a cloud platform is mostly a NUMA architecture, that is, a server may include at least one NUMA node. In this architecture, performances of different CPUs for accessing internal memories of different NUMA nodes are different. Only when a CPU accesses an internal memory of a NUMA node closest to the CPU, maximum access performance can be obtained. To achieve the maximum access performance, threads in the virtual switch may be distributed on a plurality of NUMA nodes, but the flow table information pool in the database may be stored only in an internal memory of a particular node. As a result, when requesting allocation or release of the flow table information, a thread may cross NUMA nodes. This not only degrades flow table management performance, but also causes different threads in the virtual switch to observe different network performance results, flow control is affected, and a problem of network congestion occurs. This is not friendly for the NUMA architecture.
4. Allocation and release of the flow table information in the database may not guarantee "first-in-first-out" semantics. A piece of flow table information that is just released may be immediately re-allocated, instead of being re-allocated until other unallocated flow table information is allocated. The "first-in-first-out" semantics may be important to the virtual switch, a smart network interface card, and the like, because the "first-in-first-out" semantics ensures predictability of allocation of the flow table information. The flow table information that is just released is not immediately re-allocated. This provides greater flexibility for pipeline designs of the virtual switch, the smart network interface card, and the like, and is more friendly for keeping high-speed running of the pipeline.

To resolve the foregoing problem existing when the database is used to perform flow table management, some embodiments provide a flow table management method for data packet processing. The method is based on a data structure of cascaded circular queues and an internal memory file system, to implement efficient and lock-free management of a flow table. Multiple levels of flow table queues are cascaded to implement sensing of the NUMA architecture. When a plurality of threads concurrently requests allocation or release of flow tables, one piece of flow table information can be preferentially allocated, based on priority orders of various levels of flow table queues included in a flow table information pool in an internal memory file system, to each thread from a first-level flow table queue that is available for each thread in a local internal memory. The plurality of threads are efficiently and concurrently allocated with flow table information without a lock acquired. Each thread sequentially obtains flow table information from an upper-level flow table queue only when there is no flow table information available for allocation in the first-level flow table queue of each thread. It is ensured that each thread can be allocated with the flow table information. Released flow table information is stored into a third-level flow table queue with a lowest priority, and a position of the flow table information in the third-level flow table queue is determined by using a maintenance pointer, to implement first-in-first-out predictability of the flow table information. Circular data structures of the various levels of flow table queues are stored in the internal memory file system, so that data persistence is ensured, a speed of allocation and release of the flow table information is improved, and additional information that occupies the internal memory is not required. Effective utilization of internal memory space may be improved.

The following describes the embodiments of this application with reference to the accompanying drawings. The embodiments described herein are merely for describing and explaining this application but are not for limiting this application. The embodiments of this application and features of the embodiments may be combined with each other in a case of no conflict.

FIG. 1B is a schematic diagram of an application scenario according to some embodiments. The schematic diagram of the application scenario includes a serving end device 100, switches 200 (which may be a switch 201, a switch 202, a switch 203, and the like), and terminal devices 300 (which may be a terminal device 301, a terminal device 302, and the like).

In an SDN network, the terminal device 301 communicates with the terminal device 302. The terminal device 301 transmits a data packet to the switch 201 in the network. The switch 201 does not store a flow table for forwarding the data packet, and transmits a flow table request to the serving end device 100. After receiving the request, the serving end device 100 allocates a flow table to the switch 201. The switch 201 forwards the data packet to the switch 202 based on a flow table entry in the flow table. The switch 202 stores a flow table for forwarding the data packet, and forwards the data packet to the terminal device 302 based on a flow table entry in the stored flow table. When communication between the terminal device 301 and the terminal device 302 ends, the serving end device 100 retrieves the flow tables released by the switch 201 and the switch 202.

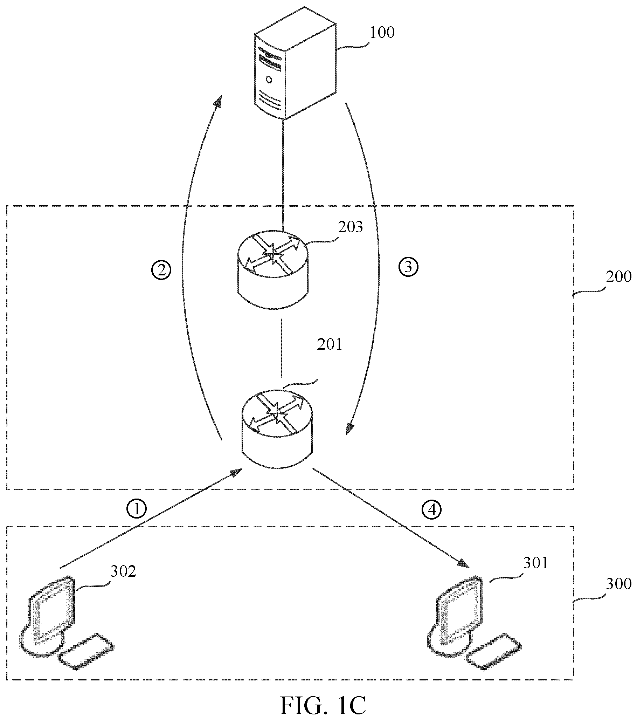

In another application scenario, different terminal devices may share a switch. As shown in FIG. 1C, in an SDN network, the terminal device 301 communicates with the terminal device 302. The terminal device 301 transmits a data packet to the switch 201 in the network. The switch 201 does not store a flow table for forwarding the data packet, and transmits a flow table request to the serving end device 100. After receiving the request, the serving end device 100 allocates a flow table to the switch 201. The switch 201 forwards the data packet to the terminal device 302 based on a flow table entry in the flow table. When communication between the terminal device 301 and the terminal device 302 ends, the serving end device retrieves the flow table released by the switch 201.

In application scenarios shown in FIG. 1B and FIG. 1C, when allocating the flow table to the switch 201 and retrieving the flow table released by the switch 201, the serving end device 100 may use the flow table management method provided in some embodiments. For details, refer to the following descriptions.

In the embodiments of the present disclosure including the embodiments of both the claims and the specification (hereinafter referred to as "all embodiments of the present disclosure"), , communication between the serving end device 100 and the switch 200 and communication between the switch 200 and the terminal device 300 may be performed through a wired network or a wireless network.

The terminal device 300 includes, but is not limited to, a computer device having a data receiving and transmitting function, such as a personal computer, a mobile phone, a tablet computer, a notebook computer, an e-book reader, an intelligent medical device, and a vehicle-mounted terminal. Various communication clients may be installed on the computer device, and the client may be software, a web page, a mini program, or the like.

The switch 200 includes a physical switch and a virtual switch, and may be divided into an access device and a transmission device. The access device is a switch (such as the switch 201 and the switch 202) that is directly connected to a service node, a virtual machine, or a terminal device in an SDN network. The transmission device is a switch (such as the switch 203) that is not an access device in the SDN network.

The serving end device 100 is a backend server of the communication client, or a server dedicated to performing processing on a data packet such as forwarding, query, and modification. This is not limited. The serving end device 100 may be an independent physical server, a server cluster or distributed system including a plurality of physical servers, or a cloud server providing a cloud computing service such as a cloud service, a cloud database, cloud computing, a cloud function, cloud storage, a network service, cloud communication, a middleware service, a domain name service, a security service, a content delivery network (CDN), or a big data and artificial intelligence platform.

When the embodiments are applied to a product or technology, for data managed based on a flow table, permission or consent from an object should be obtained, and collection, use, and processing of related data should comply with relevant laws, regulations and standards of relevant countries and regions.

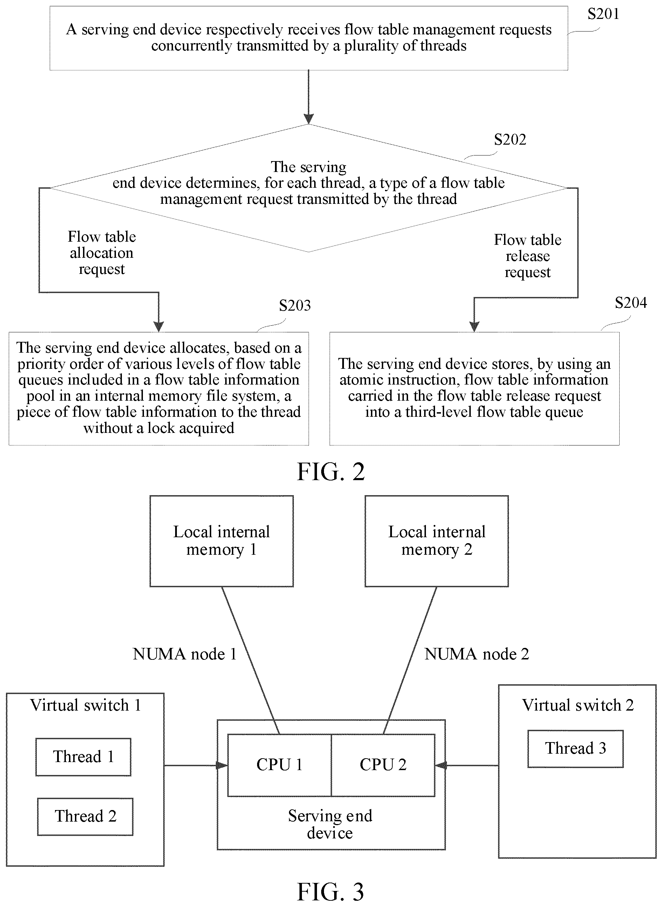

FIG. 2 is a flowchart of a flow table management method for data packet processing according to an embodiment of this application. The procedure is performed by a serving end device, and mainly includes the following operations:

S201: The serving end device respectively receives flow table management requests concurrently transmitted by a plurality of threads which are configured for processing data packets using flow tables.

In a NUMA architecture, in the plurality of threads in a virtual switch, at least one thread runs on a NUMA node, or in other words, each NUMA node runs at least one thread.

For example, as shown in FIG. 3, the serving end device includes two CPUs, which are denoted as a CPU 1 and a CPU 2, respectively corresponding to a local internal memory 1 and a local internal memory 2 with shortest access time. The local internal memory 2 is a non-local internal memory of the CPU 1, the local internal memory 1 is a non-local internal memory of the CPU 2, and both the local internal memory 1 and the local internal memory 2 are internal memories of the serving end device. The CPU 1 and the local internal memory 1, and the CPU 2 and the local internal memory 2 are respectively considered as a NUMA node. The CPU 1 is configured to execute a thread in a virtual switch 1. The CPU 1 allocates flow table information to a thread 1 and a thread 2 by accessing the local internal memory 1, or stores flow table information released by the thread 1 and the thread 2. For example, the thread 1 and the thread 2 run on a NUMA node 1. The CPU 2 is configured to execute a thread in a virtual switch 2. The CPU 2 allocates flow table information to a thread 3 by accessing the local internal memory 2, or receive flow table information released by the thread 3. The thread 3 runs on a NUMA node 2.

In all embodiments, the plurality of threads in the virtual switch may concurrently transmit flow table management requests to the serving end device, and flow table management requests transmitted by different threads may be different.

In all embodiments, different threads on the same virtual switch may transmit the same type of flow table management requests.

Still using FIG. 3 as an example, in the virtual switch 1, flow table management requests transmitted by the thread 1 and the thread 2 are both flow table allocation requests, for example, the serving end device is requested to respectively allocate a piece of flow table information to the thread 1 and the thread 2.

In all embodiments, different threads on the same virtual switch may transmit different types of flow table management requests.

Still using FIG. 3 as an example, in the virtual switch 1, a flow table management request transmitted by the thread 1 is a flow table allocation request, for example, the serving end device is requested to allocate a piece of flow table information to the thread 1. A flow table management request transmitted by the thread 2 is a flow table release request, for example, the serving end device is requested to retrieve allocated flow table information from the thread 2.

In all embodiments, different threads on different virtual switches may transmit the same type of flow table management requests.

Still using FIG. 3 as an example, in the virtual switch 1, a flow table management request transmitted by the thread 1 is a flow table allocation request, for example, the serving end device is requested to allocate a piece of flow table information to the thread 1. In the virtual switch 2, a flow table management request transmitted by the thread 3 is also a flow table allocation request, for example, the serving end device is requested to also allocate a piece of flow table information to the thread 3.

In all embodiments, different threads on different virtual switches may transmit different types of flow table management requests.

Still using FIG. 3 as an example, in the virtual switch 1, flow table management requests transmitted by the thread 1 and the thread 2 are both flow table allocation requests, for example, the serving end device is requested to respectively allocate a piece of flow table information to the thread 1 and the thread 2. In the virtual switch 2, a flow table management request transmitted by the thread 3 is a flow table release request, for example, the serving end device is requested to retrieve allocated flow table information from the thread 3.

Considering that when a plurality of threads request, in high speed and concurrently, allocation or release of flow table information, fierce contention is caused, resulting in an error or a failure in allocation and release of the flow table information, flow table management may be performed again, degrading flow table management performance. The flow table information is placed in an internal memory space of a particular NUMA node. During high concurrency, a problem of performance degradation caused by excessive cross-NUMA-node access cannot be avoided.

To resolve the foregoing problem, all embodiments provide a data structure of cascaded circular queues to store and manage flow table information, to manage a pool of the flow table information. Through a circular queue data structure, each piece of flow table information in the flow table information pool is regarded as an independent element, and content (for example, a number in a flow table ID) of each piece of flow table information is not concerned with, but only a position of each piece of flow table information in a circular queue is concerned with. In the circular queue data structure, a flow table information positioned at a head of a queue is allocated first, and a newly released flow table information is appended to a tail of the queue, to form the circular queue data structure.

In all embodiments, the data structure of cascaded circular queues is configured for storing and managing flow table information, and allocation, release and recovery of the flow table information may not rely on additional management information or meta information for assistance. In comparison with that a database is configured for storing and managing the flow table information, the data structure may not occupy additional internal memory space except for an internal memory that may be occupied for storing the flow table information, so that internal memory space is saved. This is crucial for the smart network interface card, because costs in the internal memory of the smart network interface card are different from those of the server and are higher.

For example, it is assumed that each flow table ID may occupy four bytes of internal memory space, and only 400 MB of internal memory space may store 100M flow table IDs. In comparison with using the database, the method can save approximately 800 MB to 2.4 GB of internal memory space for every 100 million flow table IDs stored.

Each level of the flow table queue does not extend with an increase of stored flow table IDs. In comparison with the database, internal memory space occupied by each level of the flow table queue is fixed, and may be small.

For example, it is assumed that a flow table queue has 64 flow table IDs stored, and four bytes of internal memory space may be occupied for storing each flow table ID. If there are four flow table queues in total, internal memory space that may be occupied for storing flow table information is 1 KB.

In all embodiments, a plurality of flow table queues that form the circular queue data structures have different access priorities.

In an example, based on two dimensions, a thread and a NUMA node in the NUMA architecture, the circular queue data structures are classified into three levels, which are respectively a first-level flow table queue, a second-level flow table queue, and a third-level flow table queue. The first-level flow table queue is prioritized over the second-level flow table queue which is prioritized over the third-level flow table queue. Each first-level flow table queue is stored in a memory space allocated to a thread from a local internal memory of the NUMA node in which the thread is running, and is configured for storing available flow table information pre-allocated to the thread. For example, each first-level flow table queue is exclusively accessed by the corresponding thread. Each second-level flow table queue is stored in a local internal memory space of a NUMA node, and is configured for storing available flow table information pre-allocated to the NUMA node, i.e., to threads running on the NUMA node. For example, all threads that are distributed on the NUMA node and that are in a virtual switch share one second-level flow table queue. The third-level flow table queue is stored in a total internal memory space of the serving end device, and is configured for storing available and non-allocated flow table information, and pieces of flow table information in the various levels of flow table queues of do not overlap with each other.

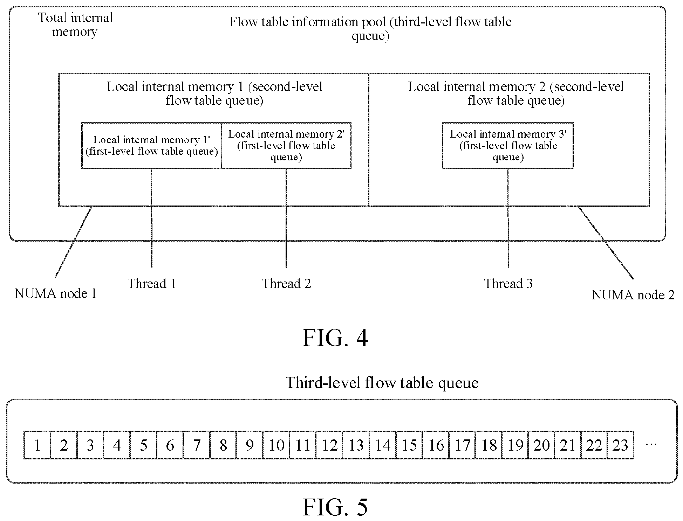

Still using FIG. 3 as an example, relationships between the various levels of flow table queues are shown in FIG. 4. The serving end device reserves internal memory space from the total internal memory to perform pooling management on the flow table information. The total internal memory space stores the third-level flow table queue. A local internal memory for each NUMA node is reserved from the total internal memory based on shortest access time. A second-level flow table queue corresponding to the NUMA node 1 is stored in the local internal memory 1 of the NUMA node 1, and a second-level flow table queue corresponding to the NUMA node 2 is stored in the local internal memory 2 of the NUMA node 2. In the local internal memory 1 of the NUMA node 1, a part of internal memory space (for example, a local internal memory 1') is reserved for the thread 1 for storing a first-level flow table queue corresponding to the thread 1. Another part of internal memory space (for example, a local internal memory 2') is reserved for the thread 2 for storing a first-level flow table queue corresponding to the thread 2. In the local internal memory 2 of the NUMA node 2, a part of memory space (for example, a local internal memory 3') is reserved for the thread 3 for storing a first-level flow table queue corresponding to the thread 3.

In all embodiments, when each virtual switch is started for the first time, available flow table information is sequentially added into the third-level flow table queue, so that the third-level flow table queue initially stores all the available flow table information, for subsequent management of allocation and release of flow tables.

Using an example in which the flow table information is the flow table ID, an initial third-level flow table queue is shown in FIG. 5.

The pooling management of the flow table information may be implemented based on the various levels of flow table queues corresponding to the foregoing data structure of cascaded circular queues. For details, refer to operations S202 and S203.

S202: The serving end device determines, for each thread, a type of a flow table management request transmitted by the thread; and in response to the type is a flow table allocation request, perform S203, or in response to the type is a flow table release request, perform S204.

For different types of flow table management requests, operations on the flow table information are different. When the flow table management request is the flow table allocation request, a piece of flow table information may be allocated to the thread. When the flow table management request is the flow table release request, a piece of flow table information released by the thread may be retrieved. When flow table management is performed, the type of the flow table management request transmitted by each thread may be determined in advance.

S203: The serving end device allocates, based on a pre-defined priority order of the various levels of flow table queues included in the flow table information pool in the internal memory file system, a piece of flow table information to the thread from one of the flow table queues without a lock acquired.

In all embodiments, the various levels of flow table queues form the data structure of cascaded circular queues and have different access priority orders. The first-level flow table queue has an access priority higher than the second-level flow table queue, and the second-level flow table queue has an access priority higher than the third-level flow table queue. That is, when a thread is to be allocated with flow table information, a piece of flow table information from the first-level flow table queue corresponding to the thread is preferentially allocated to the thread. Because each thread corresponds to a respective first-level flow table queue, threads do not contend for the same flow table information, so that the flow table information can be concurrently allocated to the threads without a lock acquired, and allocation efficiency is improved. When there is no flow table information available for allocation in a first-level flow table queue of a thread, flow table information from an upper-level flow table queue, i.e., a second-level flow table queue or the third-level flow table queue, is allocated to the thread based on the priority order by using an atomic instruction. Because the atomic instruction is more lightweight than the lock, even if the flow table information is allocated from the upper-level flow table queue, in comparison with a flow table allocation method using the lock, allocation efficiency can still be ensured.

In all embodiments, a circular queue data structure of each level of flow table queues is stored in the internal memory file system (for example, an internal memory file system of an operating system such as Linux, Windows, or MAC), to map an internal memory file to internal memory space of the virtual switch. Similar to accessing a local internal memory, a thread in the virtual switch can access the internal memory file to manage the flow table information, so that an access speed is improved in comparison with accessing a common file. Rapidly restoring the flow table information by mapping the internal memory file again can be supported. In a case of hot upgrade or an abnormal crash of the virtual switch, all the flow table information can be restored by mapping the internal memory file again. According to a data test, the manner of mapping the internal memory file can restore tens of millions of pieces of flow table information within 10 ms.

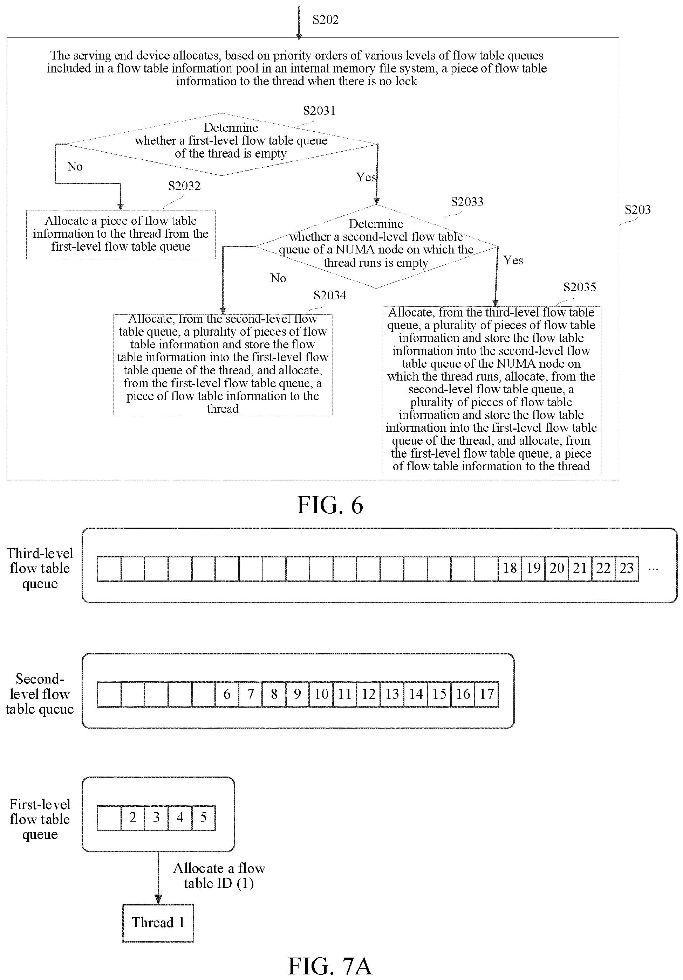

Allocating a piece of flow table information to a thread is used as an example below. For implementation details, reference may be made to the descriptions of FIG. 6, and the following operations:

S203 1: Determine whether the first-level flow table queue of the thread is empty; and in response to not empty, perform S2032; or in response to empty, perform S2033.

When the first-level flow table queue of the thread is not empty, it indicates that there is available flow table information in the first-level flow table queue of the thread, and a piece of flow table information may be directly allocated to the thread from the first-level flow table queue. When the first-level flow table queue of the thread is empty, it indicates that there is no available flow table information in the first-level flow table queue of the thread. A piece of flow table information may be allocated to the thread from an upper-level flow table queue.

S2032: Allocate the piece of flow table information to the thread from the first-level flow table queue.

For example, as shown in FIG. 7A, the first-level flow table queue of the thread is not empty, and a flow table ID may be directly allocated to the thread from the first-level flow table queue.

When the flow table queue is configured for storing the flow table information, content of the flow table information (for example, a number in a flow table ID) may not be concerned with, but only a position of each piece of flow table information in the flow table queue may be concerned with. By maintaining a head pointer and a tail pointer, concurrent multi-thread allocation and release of flow table information are implemented in a case that only the atomic instruction, instead of the lock, is used. Flow table information is always obtained from the head of the flow table queue, i.e., the position pointed to by the head pointer during allocation, so that the "first-in-first-out" semantics is implemented, and predictability of allocation of the flow table information is ensured. The head pointer refers to a pointer pointing to the head of the queue, and the tail pointer refers to a pointer pointing to a tail of the queue.

When the piece of flow table information is allocated to the thread from the first-level flow table queue, a current first head pointer in the first-level flow table queue is obtained, a piece of flow table information at a position to which the first head pointer points is allocated to the thread, and the first head pointer is pointed to a position of a next piece of flow table information.

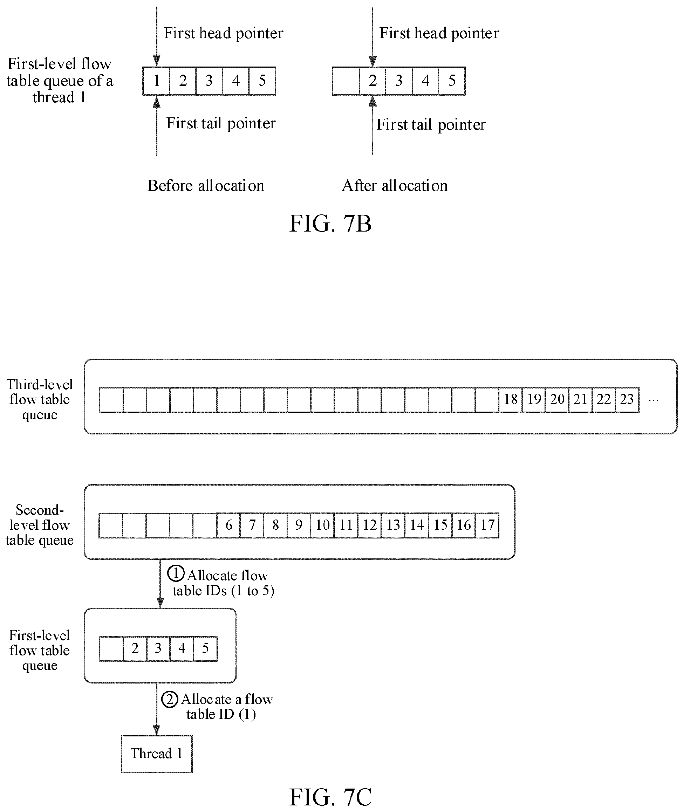

For example, as shown in FIG. 7B, a flow table ID is directly allocated to the thread 1 from the first-level flow table queue of the thread 1. Before allocation, a first head pointer and a first tail pointer in the current first-level flow table queue both point to the 1^{st} position of the queue. A flow table ID 1 at the 1^{st} position is allocated to the thread 1. After allocation is completed, the 1^{st} position is empty, and allocation cannot be performed at the 1^{st} position. The first head pointer and the first tail pointer may be moved backward by one position, for example, the first head pointer and the first tail pointer are pointed to the 2^{nd} position. Circulation of the first-level flow table queue of the thread 1 is implemented by pointing the first head pointer and the first tail pointer to the same position.

S2033: Determine whether a second-level flow table queue of a NUMA node on which the thread runs is empty; and in response to not empty, perform S2034; or in response to empty, perform S2035.

When the first-level flow table queue of the thread is empty, the piece of flow table information may be allocated to the thread from the upper-level flow table queue, and the upper-level flow table queue includes the second-level flow table queue of the NUMA node on which the thread runs and a third-level flow table queue of each NUMA node. Based on the priority order, the second-level flow table queue may be accessed first. Whether the second-level flow table queue is empty may be determined.

S2034: Allocate, from the second-level flow table queue, a plurality of pieces of flow table information and store the flow table information into the first-level flow table queue of the thread, and allocate, from the first-level flow table queue, a piece of flow table information to the thread.

When the second-level flow table queue of the NUMA node on which the thread runs is not empty, it indicates that a piece of flow table information may be allocated to the thread from the second-level flow table queue, and the third-level flow table queue may not be accessed.

For example, the first-level flow table queue of the thread 1 is empty, and the second-level flow table queue of the NUMA node on which the thread 1 runs is not empty. As shown in FIG. 7C, five flow table IDs are allocated to the first-level flow table queue of the thread 1 from the second-level flow table queue at one time, and one piece of flow table information is allocated to the thread 1 from the first-level flow table queue.

When the plurality of pieces of flow table information starting from the head position of the second-level flow table queue are allocated to the first-level flow table queue, a current second head pointer in the second-level flow table queue is obtained, a piece of flow table information at a position to which the second head pointer points and at least one piece of flow table information thereafter are obtained from the second-level flow table queue and stored into the first-level flow table queue of the thread, and the second head pointer is pointed to the position of the 1^{st} piece of flow table information in remaining flow table information in the second-level flow table queue.

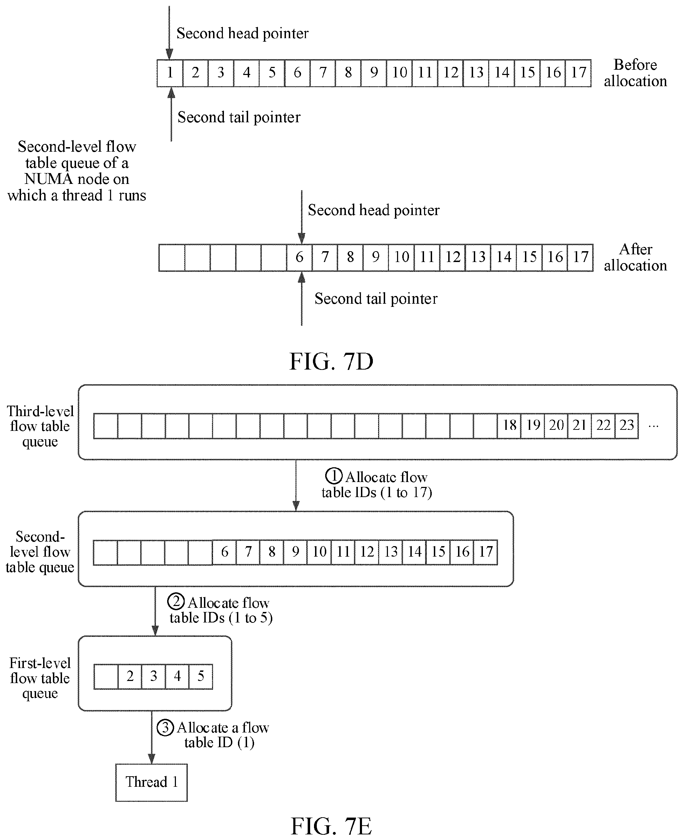

For example, as shown in FIG. 7D, before a flow table ID is allocated to the thread 1 from the second-level flow table queue of the NUMA node on which the thread 1 runs, the second head pointer and the second tail pointer in the current second-level flow table queue both point to the 1^{st} position of the queue. A flow table ID 1 at the 1^{st} position and four flow table IDs thereafter are allocated to the first-level flow table queue of the thread 1. After allocation is completed, the second head pointer and the second tail pointer are moved backward by five positions, for example, the second head pointer and the second tail pointer are pointed to the 6^{th} position. Circulation of the second-level flow table queue of the NUMA node is implemented by pointing the second head pointer and the first tail pointer to the same position.

After the second-level flow table queue is allocated to the first-level flow table queue, for a process of allocating the piece of flow table information to the thread from the first-level flow table queue, refer to S2032.

S2035: Allocate, from the third-level flow table queue, a plurality of pieces of flow table information and store the flow table information into the second-level flow table queue of the NUMA node on which the thread runs, allocate, from the second-level flow table queue, a plurality of pieces of flow table information and store the flow table information into the first-level flow table queue of the thread, and allocate, from the first-level flow table queue, a piece of flow table information to the thread.

When the second-level flow table queue of the NUMA node on which the thread runs is empty, the third-level flow table queue may be accessed to allocate a piece of flow table information to the thread.

For example, when both the first-level flow table queue of the thread 1 and the second-level flow table queue of the NUMA node on which the thread 1 runs are empty, as shown in FIG. 7E, 17 flow table IDs are allocated, at one time from the third-level flow table queue, to the second-level flow table queue of the NUMA node on which the thread 1 runs. Five flow table IDs starting from the head of the second-level flow table queue are allocated to the first-level flow table queue of the thread 1 at one time. Finally, a piece of flow table information is allocated to the thread 1 from the first-level flow table queue.

When the plurality of pieces of flow table information are allocated to the second-level flow table queue from the third-level flow table queue, a current third head pointer in the third-level flow table queue is obtained, a piece of flow table information at a position to which the third head pointer points and at least one piece of flow table information thereafter are obtained from the third-level flow table queue and stored into the second-level flow table queue of the NUMA node on which the thread runs, and the third head pointer is pointed to a position of the 1^{st} piece of flow table information in remaining flow table information in the second-level flow table queue.

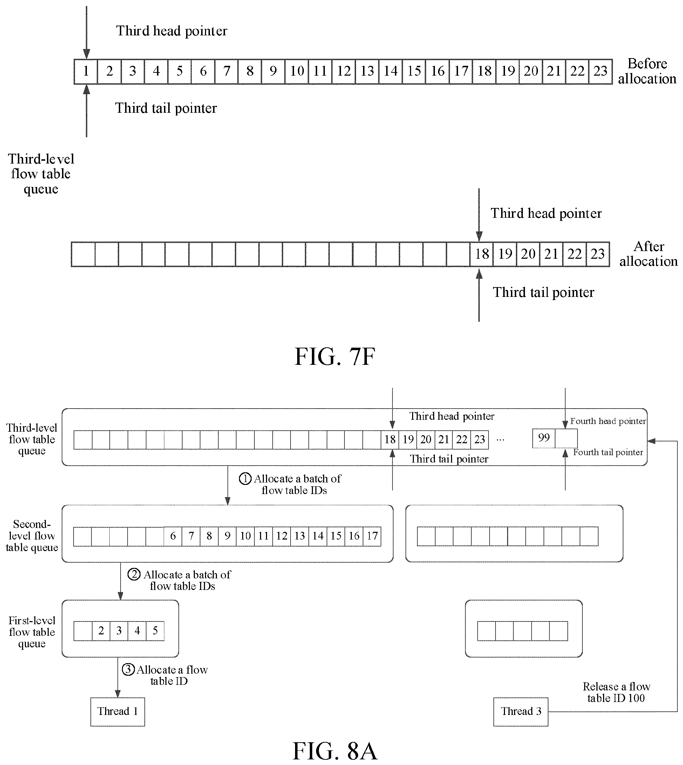

For example, as shown in FIG. 7F, before allocation, the third head pointer and a third tail pointer in the current third-level flow table queue both point to the 1^{st} position of the queue. A flow table ID 1 in the 1^{st} position and 16 flow table IDs thereafter are allocated to the second-level flow table queue of the NUMA node on which the thread 1 runs. After allocation is completed, the third head pointer and the third tail pointer are moved backward by 17 positions, for example, the third head pointer and the third tail pointer are pointed to the 18^{th} position. Circulation of the third-level flow table queue is implemented by pointing the third head pointer and the third tail pointer to the same position.

In the flow table management method provided in all embodiments, each first-level flow table queue is exclusively owned by one thread and cannot be accessed by another thread. The flow table information can be efficiently and concurrently allocated to each thread from each first-level flow table queue without the lock or without using the atomic instruction. The atomic instruction is used only when the first-level flow table queue is empty and the upper-level flow table queue may be accessed to allocate the flow table information, and cross-NUMA-node internal memory access may occur only when the flow table information is allocated from a third-level flow table queue. During high concurrency, a quantity of times of cross-NUMA-node internal memory access can be reduced to the greatest extent, to improve performance of accessing a flow table queue.

For example, 4096 pieces of flow table information are allocated from the third-level flow table queue to a second-level flow table queue of a NUMA node on which a thread runs and 4096 pieces of flow table information are allocated from the second-level flow table queue to a first-level flow table queue of the thread. Only 1/64 of internal memory access may use atomic instructions, and on average, cross-NUMA-node internal memory access occurs once every 256 thousand times of allocation.

S204: The serving end device stores, e.g., by using the atomic instruction, flow table information carried in the flow table release request into the third-level flow table queue.

Each first-level flow table queue is exclusively owned by one thread, and the flow table information in the third-level flow table queue may be allocated to a lower-level flow table queue. To ensure that released flow table information can be re-allocated to another thread, when the flow table management request of the thread is a flow table release request, flow table information carried in the flow table release request may be stored into the third-level flow table queue whose priority is the lowest.

Release of the flow table information usually occurs in a process of network flow aging, and is not in a key path affecting performance of the virtual switch. To guarantee the first-in-first-out semantics, for flow table information released by each thread, the serving end device stores, by using the atomic instruction, the released flow table information into the third-level flow table queue. A release speed of the flow table information is slower than an allocation speed of the flow table information.

During implementation, a current fourth head pointer in the third-level flow table queue is obtained, the flow table information carried in the flow table release request is stored at a position to which the fourth head pointer points, and the fourth head pointer is moved to a next position, to ensure that the released flow table information is allocated only after other flow table information before the released flow table information is allocated.

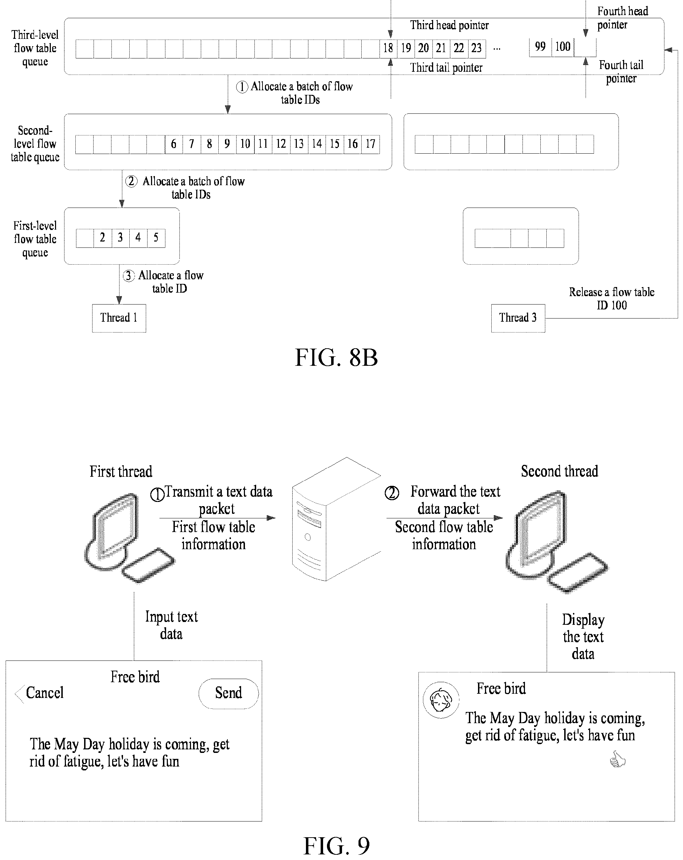

For example, as shown in FIG. 8A, before the thread 3 releases a flow table ID 100, in the current third-level flow table queue, the fourth head pointer and a fourth tail pointer both point to the 100^{th} position, and no flow table ID is stored at this position. For example, the position is empty. The released flow table ID 100 may be stored at this position. As shown in FIG. 8B, after receiving the flow table release request transmitted by the thread 3, the serving end device places, based on the position currently pointed to by the fourth head pointer and the fourth tail pointer, the flow table ID 100 at the position currently pointed to, and moves both the fourth head pointer and the fourth tail pointer backward by one position.

It can be learned from FIG. 8A and FIG. 8B that, the third-level flow table queue is different from the first-level flow table queue and the second-level flow table queue. The third-level flow table queue includes two head pointers and two tail pointers. The third head pointer and the third tail pointer are configured for circularly managing allocation of the flow table information, and the fourth head pointer and the fourth tail pointer are configured for circularly managing release of the flow table information.

In all embodiments, a head pointer in each level of flow table queue is maintained, so that flow table information is always allocated from a position pointed to by the head pointer during allocation, and flow table information is always stored at the position pointed to by the head pointer during release. A case in which threads contend for use of the flow table information and the atomic instruction is reduced to the greatest extent, to implement sequentiality of allocation and release of the flow table information, and guarantee the "first-in-first-out" queue semantics. Predictability of allocation and release of the flow table information is improved. This is friendlier for pipeline designs of the virtual switch and the smart network interface card. A tail pointer corresponding to each head pointer points to the same position in a flow table queue, to form a bidirectional circular flow table queue, so that the flow table queue can be recycled.

In an example, after the piece of flow table information is allocated to each thread without a lock acquired, a processing operation is performed, based on the flow table information of each thread, on a data packet transmitted by each thread. The processing operation includes one of searching, forwarding, modifying, and deleting the data packet. The data packet includes one of an image data packet, an audio data packet, a text data packet, and a web page data packet.

Using an example in which a forwarding operation is performed on a text data packet between a first thread and a second thread, as shown in FIG. 9, the first thread packs, into a text data packet, text data that is input by an object A through a terminal device 1, and transmits, based on first flow table information allocated to the first thread, the text data packet to the serving end device. The serving end device forwards, based on second flow table information allocated to the second thread, the text data packet to the second thread. A terminal device 2 decodes the text data packet and displays the text data to an object B.

Based on the same technical concept, all embodiments provide a schematic diagram of a structure of a flow table management apparatus for data packet processing. The flow table management apparatus can implement the foregoing flow table management method for data packet processing, and can achieve the same technical effect.

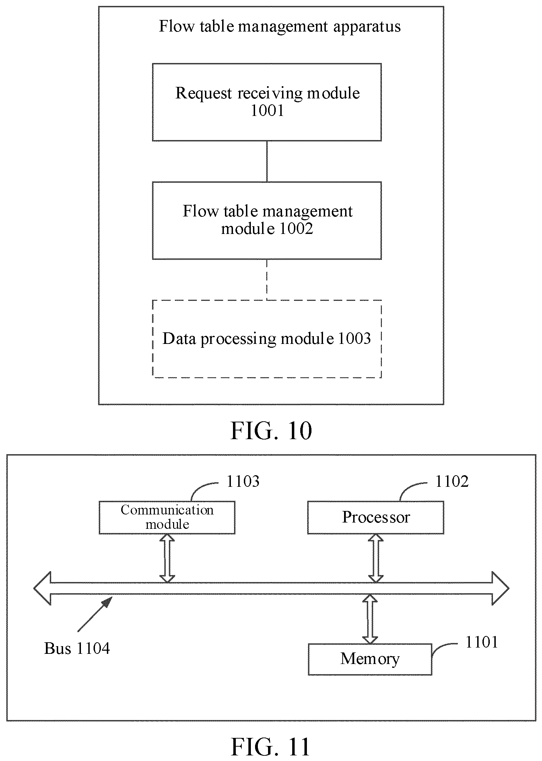

Referring to FIG. 10, the flow table management apparatus includes a request receiving module 1001 and a flow table management module 1002.

The request receiving module 1001 is configured to respectively receive flow table management requests concurrently transmitted by a plurality of threads. At least one of the plurality of threads runs on a NUMA node.

The flow table management module 1002 is configured to: for each thread, allocate, when a flow table management request of the thread is a flow table allocation request, based on priority orders of various levels of flow table queues included in a flow table information pool in an internal memory file system, a piece of flow table information to the thread without a lock acquired, the various levels of flow table queues including at least a first-level flow table queue, a second-level flow table queue, and a third-level flow table queue; or store, when a flow table management request of the thread is a flow table release request, by using an atomic instruction, flow table information carried in the flow table release request into a third-level flow table queue.

In the various levels of flow table queues, each first-level flow table queue stores a piece of flow table information available for each thread in a local internal memory, each second-level flow table queue stores a piece of flow table information available for each of the at least one thread running on the NUMA node in a local internal memory, and the third-level flow table queue stores a piece of flow table information available for each NUMA node in a total internal memory. Pieces of flow table information in the various levels of flow table queues do not overlap with each other. A priority of the first-level flow table queue is higher than a priority of the second-level flow table queue, and the priority of the second-level flow table queue is higher than a priority of the third-level flow table queue.

In some embodiments, the flow table management module 1002 is specifically configured to:
when a first-level flow table queue of the thread is not empty, allocate, from the first-level flow table queue, a piece of flow table information to the thread; or
when the first-level flow table queue of the thread is empty, allocate, from an upper-level flow table queue, a piece of flow table information to the thread.

In all embodiments, the flow table management module 1002 may be configured to:
when a second-level flow table queue of a NUMA node on which the thread runs is not empty, allocate, from the second-level flow table queue, a plurality of pieces of flow table information and store the flow table information into the first-level flow table queue of the thread, and allocate, from the first-level flow table queue, a piece of flow table information to the thread; or
when the second-level flow table queue of the NUMA node on which the thread runs is empty, allocate, from the third-level flow table queue, a plurality of pieces of flow table information and store the flow table information into the second-level flow table queue of the NUMA node on which the thread runs, allocate, from the second-level flow table queue, a plurality of pieces of flow table information and store the flow table information into the first-level flow table queue of the thread, and allocate, from the first-level flow table queue, a piece of flow table information to the thread.

In all embodiments, the flow table management module 1002 may be configured to:
obtain a current third head pointer in the third-level flow table queue, store a piece of flow table information that is at a position to which the third head pointer points and at least one piece of flow table information thereafter into the second-level flow table queue of the NUMA node on which the thread runs, and point the third head pointer at a position of the 1^{st} piece of flow table information in remaining flow table information.

In all embodiments, the flow table management module 1002 may be configured to:
obtain a current second head pointer in the second-level flow table queue, store a piece of flow table information that is at a position to which the second head pointer points and at least one piece of flow table information thereafter into the first-level flow table queue of the thread, and point the second head pointer to a position of the 1^{st} piece of flow table information in remaining flow table information.

In all embodiments, the flow table management module 1002 may be configured to:
obtain a current first head pointer in the first-level flow table queue, allocate a piece of flow table information that is at a position to which the first head pointer points to the thread, and point the first head pointer to a position of a next piece of flow table information.

In all embodiments, the flow table management module 1002 may be configured to:
obtain a current fourth head pointer in the third-level flow table queue, store the flow table information carried in the flow table release request at a position to which the fourth head pointer points, and move the fourth head pointer to a next position.

In all embodiments, a release speed at which the flow table information carried in the flow table release request is stored into the third-level flow table queue is slower than an allocation speed at which a piece of flow table information is allocated to another thread without a lock acquired.

In all embodiments, the apparatus further includes a data processing module 1003, configured to perform, based on the flow table information of each thread, a processing operation on a data packet transmitted by each thread. The processing operation includes one of searching, forwarding, modifying, and deleting of the data packet, and the data packet includes one of an image data packet, an audio data packet, a text data packet, and a web page data packet.

In the flow table management apparatus for data packet processing provided in all embodiments, a data structure of cascaded circular queues is configured for storing and managing a flow table. In the various levels of flow table queues, each first-level flow table queue stores a piece of flow table information available for the thread in the local internal memory. For example, each first flow table queue is exclusively owned by one thread, and the thread does not contend with another thread for flow table information. For each thread requesting flow table allocation, flow table information may be concurrently allocated from a first-level flow table queue corresponding to each thread without a lock acquired, to improve flow table allocation efficiency. When there is no flow table information available for allocation in the first-level flow table queue, flow table information may be allocated to each thread sequentially from a second-level flow table queue and a third-level flow table queue, to ensure stability of allocation of the flow table information to each thread in a manner of cascaded queues. When a flow table management request of a thread is a flow table release request, flow table information carried in the flow table release request is stored, by using an atomic instruction, into the third-level flow table queue with a lowest priority. For each thread requesting to release a flow table, flow table information released by each thread is stored into the third-level flow table queue with the lowest priority, to ensure that after unallocated flow table information is allocated, newly released flow table information can be re-allocated, thereby improving utilization of the flow table information. The data structure of cascaded circular queues is mapped in the internal memory file system, to implement pooling management of the flow table information. The internal memory file system is accessed just like accessing the local internal memory, to allocate or release the flow table information, to improve a management speed of the flow table information.

Based on the foregoing, an electronic device is further provided in all embodiments. In all embodiments, the electronic device may be a serving end device, or may be a smart network interface card. In all embodiments, a structure of the electronic device may be shown in FIG. 11. The electronic device includes a memory 1101, a communication module 1103, and one or more processors 1102.

The memory 1101 is configured to store a computer program executed by the processor 1102. The memory 1101 may mainly include a program storage area and a data storage area. The program storage area may store an operating system, an operating instruction set, and the like.

The memory 1101 may be a volatile memory, for example, a random access memory (RAM). The memory 1101 may be a non-volatile memory, for example, a read-only memory, a flash memory, a hard disk drive (HDD), or a solid-state drive (SSD). The memory 1101 is any other medium capable of being configured to carry or store an expected computer program having an instruction or data structural form and being accessed by a computer, this is not limited herein. The memory 1101 may be a combination of the foregoing memories.

The processor 1102 may include one or more central processing units (CPUs), or is a digital processing unit, or the like. The processor 1102 is configured to implement the flow table management method for data packet processing when invoking the computer program stored in the memory 1101.

The communication module 1103 is configured to communicate with a terminal device and another server.

A connection medium between the memory 1101, the communication module 1103, and the processor 1102 is not limited. In all embodiments, in FIG. 11, the memory 1101 and the processor 1102 are connected through a bus 1104. The bus 1104 is described with a bold line in FIG. 11. A connection manner between other components is an example for description, and is not intended to be a limitation. The bus 1104 may be classified as an address bus, a data bus, a control bus, and the like. For ease of description, the bus in FIG. 11 is described by using only one bold line, but which does not describe that there is only one bus or one type of bus.

The memory 1101 has a computer storage medium stored therein. The computer storage medium has a computer-executable instruction stored therein. The computer-executable instruction is configured for implementing the flow table management method for data packet processing in all embodiments. The processor 1102 is configured to perform the foregoing operations of the flow table management method for data packet processing.

In all embodiments, aspects of the data classification method may be implemented in a form of a program product including a computer program. When the program product runs on an electronic device, the computer program is configured to enable the electronic device to perform the operations of the flow table management method for data packet processing according to all embodiments described above. For example, the electronic device may perform the operations shown in FIG. 2.

The program product may use any combination of one or more readable media. The readable medium may be a computer-readable signal medium or a readable storage medium. The readable storage medium may be, for example, but not limited to, an electrical, magnetic, optical, electromagnetic, infrared, or a semiconductor system, apparatus, or device, or any combination thereof. Examples of the readable storage medium include: an electrical connection having one or more wires, a portable disk, a hard disk, a random-access memory, a read-only memory, an erasable programmable read-only memory, an optical fiber, a compact disc read-only memory (CD-ROM), an optical storage device, a magnetic storage device, or any combination thereof.

The program product in all embodiments may use the compact disc read-only memory, include the computer program, and may run on the electronic device. The program product is not limited thereto. In all embodiments, the readable storage medium may be any tangible medium that includes or stores a program. The program may be used by or in combination with a command execution system, apparatus, or device.

The readable signal medium may include a data signal being in a baseband or transmitted as a part of a carrier, and carries the readable computer program. A data signal propagated in such a way may assume a plurality of forms, including, but not limited to, an electromagnetic signal, an optical signal, or any combination thereof. The readable signal medium may be any readable medium other than the readable storage medium. The readable medium may transmit, propagate, or transmit a program used by or in combination with a command execution system, apparatus, or device.

The computer program included in the readable medium may be transmitted by using any medium, including but not limited to a wireless medium, a wire, an optical cable, a radio frequency (RF), and the like, or any combination thereof.

The computer program configured to perform the operations of the disclosure may be written in any combination of one or more programming languages. The programming languages include object-oriented programming languages such as Java and C++, and further include procedural programming languages such as a "C" language or similar programming languages. The computer program may be completely executed on a user computing apparatus, partially executed on the user computing apparatus, executed as an independent software package, partially executed on the user computing apparatus and partially executed on a remote computing apparatus, or completely executed on the remote computing apparatus or a server. In a situation involving the remote computing apparatus, the remote computing apparatus may be connected to the user computing apparatus by using any type of network, including a local area network or a wide area network, or may be connected to an external computing apparatus.

A person skilled in the art should understand that all embodiments may be provided as a method, a system, or a computer program product. All embodiments may use a form of hardware-only embodiments, software-only embodiments, or embodiments with a combination of software and hardware. All embodiments may be in a form of a computer program product implemented on one or more computer-usable storage media (including but not limited to a magnetic disk memory, a CD-ROM, an optical memory, and the like) including computer-usable computer programs.

Although all embodiments have been described, the persons skilled in the art can make changes and modifications to these embodiments. The following claims are intended to cover all embodiments and all the changes and modifications falling within the scope of the disclosure.

The foregoing embodiments are used for describing, instead of limiting the technical solutions of the disclosure. A person of ordinary skill in the art shall understand that although the disclosure has been described in detail with reference to the foregoing embodiments, modifications can be made to the technical solutions described in the foregoing embodiments, or equivalent replacements can be made to some technical features in the technical solutions, provided that such modifications or replacements do not cause the essence of corresponding technical solutions to depart from the scope of the technical solutions of the embodiments of the disclosure and the appended claims.

## Claims

1. A flow table management method, performed by a server, wherein
the server includes at least one non-uniform memory access, NUMA, node, each of the at least one NUMA node runs at least one thread for processing data packets using flow tables,
the method comprises:
in response to a flow table allocation request received from a first thread running in a first NUMA node, allocating a flow table identifier to the first thread, wherein the flow table identifier is selected from one of a first-level flow table queue, a second-level flow table queue and a third-level flow table queue based on a pre-defined priority order, according to which the first-level flow table queue is prioritized over the second-level flow table queue which is prioritized over the third-level flow table queue; wherein:
the first-level flow table queue is stored in a first memory space which is allocated to the first thread from a second memory space of the first NUMA node, the second-level flow table queue is stored in the second memory space, and the third-level flow table queue is stored in a memory space of the server;
in response to a flow table release request received from the first thread, storing a second flow table identifier identified in the flow table release request into the third-level flow table queue.

2. The method according to claim 1, wherein allocating the flow table identifier to the first thread comprises:
based on the first-level flow table queue not being empty, allocating, from the first-level flow table queue, the flow table identifier to the first thread; and
based on the first-level flow table queue being empty, allocating, from an upper-level flow table queue, the flow table identifier to the first thread.

3. The method according to claim 2, wherein allocating from the upper-level flow table queue the flow table identifier to the first thread comprises:
based on the second-level flow table queue not being empty:
allocating, from the second-level flow table queue, a first plurality of flow table identifiers,
storing the first plurality of flow table identifiers into the first-level flow table queue, and
allocating, from the first-level flow table queue, the flow table identifier to the first thread; and
based on the second-level flow table queue being empty:
allocating, from the third-level flow table queue, a second plurality of flow table identifiers,
storing the second plurality of flow table identifiers into the second-level flow table queue;
allocating, from the second-level flow table queue, a first plurality of flow table identifiers and storing the first plurality of flow table identifiers into the first-level flow table queue; and
allocating, from the first-level flow table queue, the flow table identifier to the first thread.

4. The method according to claim 3, wherein allocating from the third-level flow table queue the second plurality of flow table identifiers comprises:
obtaining from the third-level flow table queue and storing into the second-level flow table queue a flow table identifier that is at a head position in the third-level flow table queue and at least one flow table identifier thereafter.

5. The method according to claim 3, wherein allocating from the second-level flow table queue the first plurality of flow table identifiers comprises:
obtaining from the second-level flow table queue and storing into the first-level flow table queue a flow table identifier that is at a head position in the second-level flow table queue and at least one flow table identifier thereafter.

6. The method according to claims 2 or 3, wherein allocating the flow table identifier to the first thread comprises:
obtaining from the first-level flow table queue and allocating to the first thread a flow table identifier that is at a head position in the first-level flow table queue.

7. The method according to claim 1, wherein storing the second flow table identifier identified in the flow table release request into the third-level flow table queue comprises:
storing the second flow table identifier at a tail position the third-level flow table queue.

8. The method according to claim 1, wherein a release speed at which the second flow table identifier identified in the flow table release request is stored into the third-level flow table queue is slower than an allocation speed at which a third flow table identifier is allocated to a second thread.

9. The method according to claim 1, further comprising:
performing, based on the first flow table identifier, a plurality of processing operations on a plurality of data packets transmitted by the first thread, wherein the plurality of processing operations comprises at least one from among searching, forwarding, modifying, and deleting of the plurality of data packets, and wherein the plurality of data packets comprises at least one from among an image data packet, an audio data packet, a text data packet, and a web page data packet.

10. A flow table management apparatus, applied in a server, wherein
the server includes at least one non-uniform memory access, NUMA, node, each of the at least one NUMA node runs at least one thread for processing data packets using flow tables,
the apparatus comprises:
a flow table management module, configured to: in response to a flow table allocation request received from a first thread running in a first NUMA node, allocating a flow table identifier to the first thread, wherein the flow table identifier is selected from one of a first-level flow table queue, a second-level flow table queue and a third-level flow table queue based on a pre-defined priority order, according to which the first-level flow table queue is prioritized over the second-level flow table queue which is prioritized over the third-level flow table queue; in response to a flow table release request received from the first thread, store a second flow table identifier identified in the flow table release request into the third-level flow table queue;
wherein the first-level flow table queue is stored in a first memory space which is allocated to the first thread from a second memory space of the first NUMA node, the second-level flow table queue is stored in the second memory space, and the third-level flow table queue is stored in a memory space of the server.

11. The apparatus according to claim 10, wherein the flow table management module is configured to: based on the first-level flow table queue not being empty, allocate, from the first-level flow table queue, the flow table identifier to the first thread; and based on the first-level flow table queue being empty, allocate, from an upper-level flow table queue, the flow table identifier to the first thread.

12. The apparatus according to claim 11, wherein the flow table management module is configured to:
based on the second-level flow table queue not being empty, allocate, from the second-level flow table queue, a first plurality of flow table identifiers, store the first plurality of flow table identifiers into the first-level flow table queue, and allocate, from the first-level flow table queue, the flow table identifier to the first thread; and
based on the second-level flow table queue being empty, allocate, from the third-level flow table queue, a second plurality of flow table identifiers, store the second plurality of flow table identifiers into the second-level flow table queue; allocate, from the second-level flow table queue, a first plurality of flow table identifiers and store the first plurality of flow table identifiers into the first-level flow table queue; and allocate, from the first-level flow table queue, the flow table identifier to the first thread.

13. The apparatus according to claim 12, wherein the flow table management module is configured to:
obtain from the third-level flow table queue and store into the second-level flow table queue a flow table identifier that is at a head position in the third-level flow table queue and at least one flow table identifier thereafter.

14. The apparatus according to claim 12, wherein the flow table management module is configured to:
obtain from the second-level flow table queue and store into the first-level flow table queue a flow table identifier that is at a head position in the second-level flow table queue and at least one flow table identifier thereafter.

15. The apparatus according to claim 11 or 12, wherein the flow table management module is configured to:
obtain from the first-level flow table queue and allocate to the first thread a flow table identifier that is at a head position in the first-level flow table queue.

16. The apparatus according to claim 10, wherein the flow table management module is configured to:
store the second flow table identifier at a tail position the third-level flow table queue.

17. The apparatus according to claim 10, wherein a release speed at which the second flow table identifier identified in the flow table release request is stored in the third-level flow table queue is slower than an allocation speed at which a third flow table identifier is allocated to a second thread.

18. An electronic device, comprising a processor and a memory, the memory having a computer program stored therein, and the computer program, when being executed by the processor, enabling the processor to perform operations of the method according to any one of claims 1 to 9.

19. A computer-readable storage medium, comprising a computer program, the computer program, when being run on an electronic device, being configured for enabling the electronic device to perform operations of the method according to any one of claims 1 to 9.

20. A program product, when being run on an electronic device, being configured for enabling the electronic device to perform operations of the method according to any one of claims 1 to 9.
